# EUROPÄISCHE PATENTSCHRIFT

(11) **EP 2 080 447 B1**
(45) Veröffentlichungstag und Bekanntmachung des Hinweises auf die Patenterteilung: **04.01.2012**
(21) Anmeldenummer: 09000206.4
(22) Anmeldetag: 09.01.2009
(51) Int. Cl.: A47B 9/20, F16B 7/10, F16B 37/04

(54) **Teleskopierbar ineinander geführte Teleskopelemente**
Extendible nested telescope components
Eléments de téléscope guidés les uns à l'intérieur des autres de manière téléscopable

(30) Priorität: 16.01.2008 DE 202008000628 U
(43) Veröffentlichungstag der Anmeldung: 22.07.2009
(73) Patentinhaber: Oelschläger Metalltechnik GmbH, 27318 Hoya/Weser (DE)
(72) Erfinder: Block, Martin, 31632 Husum (DE)
(74) Vertreter: Manasse, Uwe

(56) Entgegenhaltungen:
- DE-U1- 20 317 442
- US-A- 4 190 377

## Beschreibung

Die vorliegende Erfindung betrifft teleskopierbar ineinander geführte Teleskopelemente, insbesondere Profile eines, insbesondere höhenverstellbaren, Tischgestells, mit zumindest im wesentlichen identischer Querschnittsgestalt, wobei ausgewählte Stellungen mittels einer Rasteinrichtung rastsicherbar sind, gemäß dem Oberbegriff von Anspruch 1.

Aus der DE 203 17 442 U1 sind Teleskopelemente der eingangs genannten Art bekannt. Diese sind jedoch zu ungenau und ungleichmäßig geführt.

Der Erfindung liegt somit die Aufgabe zugrunde, eine werkzeuglose Verstellung von teleskopierbar ineinander geführten Teleskopelementen in Teleskopierrichtung mit genauerer und gleichmäßigerer Führung zu ermöglichen.

Erfindungsgemäß wird diese Aufgabe gelöst durch teleskopierbar ineinander geführte Teleskopelemente, insbesondere Profile eines, insbesondere höhenverstellbaren, Tischgestells, mit zumindest im wesentlichen identischer Querschnittsgestalt, wobei ausgewählte Stellungen mittels einer Rasteinrichtung rastsicherbar sind, die einen Rastknopf, welcher an einem äußeren der beiden Teleskopelemente zur Druckbetätigung freiliegt, und einen mit dem Rastknopf in Wirkverbindung stehenden Rastschuh aufweist, der im Inneren des inneren der beiden Teleskopelemente angeordnet und in Rastaussparungen in einer Längsöffnung im inneren Teleskopelement federnd einrastbar und durch den Rastknopf gegen die Federkraft weiter in das Innere des inneren Teleskopelements zurückschiebbar, in Teleskopierrichtung durch Bewegen des inneren Teleskopelements gegenüber dem äußeren Teleskopelement verstellbar und unter der Federkraft in eine andere Rastaussparung oder andere Rastaussparungen wieder einrastbar ist, dadurch gekennzeichnet, dass die teleskopierbar ineinander geführten Teleskopelemente ferner mindestens zwei in Längsrichtung im Abstand zueinander angeordnete Paare von einander in Längsrichtung quer gegenüberliegend angeordneten Öffnungen in dem inneren Teleskopelement umfassen, wobei jeder Öffnung ein Kugelwälzlager zugeordnet ist, das am inneren Umfang des inneren Teleskopelements so angeordnet ist, dass dessen Kugeln über die jeweilige Öffnung innen an dem äußeren Teleskopelement angreifen.

Insbesondere kann dabei vorgesehen sein, dass ein Rastschuhhalter auf der Höhe des Rastknopfes im Inneren des inneren Teleskopelements, der zum Halten und Führen des Rastschuhs gestaltet und an dem äußeren Teleskopelement in einem Abstand lösbar befestigt ist, und mindestens zwei Federn zwischen dem Rastschuhhalter und dem Rastschuh zum Ausüben der Federkraft auf den Rastschuh von dem Rastschuhhalter weg quer zur Teleskopierrichtung in Richtung nach außen vorgesehen sind. Der Rastschuhhalter kann dabei direkt oder indirekt an dem äußeren Teleskopelement lösbar befestigt sein.

Gemäß einer besonderen Ausführungsform der Erfindung wird der Rastschuh mittels einer durch einen mittigen Steg unterteilten Durchgangsbohrung in selbigem und einem komplementär gestalteten Ansatz an dem Rastschuhhalter quer zur Teleskopierrichtung bei Druckbetätigung des Rastknopfes geführt.

Gemäß einer weiteren besonderen Ausführungsform der Erfindung kann vorgesehen sein, dass der Rastknopf einen flachen Betätigungskopf mit einer äußeren Betätigungsfläche und einen an der Unterseite des Betätigungskopfes mittig angeordneten Schaft aufweist, der sich in den Ansatz des Rastschuhhalters hinein erstreckt und dessen Ende an dem Steg des Rastschuhs anliegt.

In einer weiteren besonderen Ausführungsform der Erfindung kann vorgesehen sein, dass ein schraubenartiges Element mit einem flachen Kopf mit einer mittigen Vertiefung und einem hohlen Schaft mit einem Außengewinde sowie eine gegenüber dem flachen Kopf des schraubenförmigen Elements kleinere Öffnung in dem äußeren Teleskopelement vorgesehen sind, durch die sich der hohle Schaft des schraubenartigen Elements von außen in den Ansatz des Rastschuhhalters hinein erstreckt und mit dem Ansatz über ein Innengewinde in letzterem in Schraubverbindung steht, wobei in der mittigen Vertiefung in dem flachen Kopf des schraubenartigen Elements der flache Betätigungskopf des Rastknopfes gegen die Federkraft verschiebbar angeordnet ist und sich der Schaft des Rastknopfes durch den hohlen Schaft des schraubenartigen Elements erstreckt.

Vorteilhafterweise ist der Rastschuh aus Kunststoff.

Weiterhin ist der Rastschuhhalter und/oder der Rastknopf vorteilhafterweise aus Metall.

Günstigerweise ist das schraubenartige Element ebenfalls aus Metall.

Günstigerweise sind die mindestens zwei Federn Schraubenfedern.

Gemäß einer weiteren besonderen Ausführungsform der Erfindung kann vorgesehen sein, dass das äußere Teleskopelement und das innere Teleskopelement jeweils einen rechteckigen oder quadratischen oder runden Querschnitt oder jeweils ein Freiformprofil aufweisen.

Alternativ ist auch denkbar, dass das äußere Teleskopelement und das innere Teleskopelement jeweils einen runden Querschnitt aufweisen.

Wiederum alternativ kann vorgesehen sein, dass das äußere Teleskopelement und das innere Teleskopelement jeweils ein Freiformprofil aufweisen.

Günstigerweise sind die Kugelwälzlager in die jeweilige Öffnung einklipsbar.

Weiterhin können genau zwei Paare von Öffnungen vorgesehen sein.

Gemäß einer weiteren besonderen Ausführungsform der Erfindung weisen das innere Teleskopelement und das äußere Teleskopelement jeweils einen rechteckigen Querschnitt auf und sind die Öffnungen zumindest in den Schmalseiten des inneren Teleskopelements ausgebildet.

Günstigerweise umfasst das Kugelwälzlager: einen Kugelkäfig, der aus zwei identischen Kugelkäfighälften aus Kunststoff zusammengesetzt ist und mindestens zwei Kugelkäfigtaschen aufweist, und in jeder Kugelkäfigtaschen eine darin gehaltene Kugel, die durch eine jeweilige in die jeweilige Kugelkäfigtasche eingelegte Federeinrichtung abgefedert ist.

Vorteilhafterweise ist das Kugelwälzlager ein Linearlager.

Zweckmäßigerweise resultieren die Kugelkäfigtaschen erst durch Zusammensetzen der Kugelkäfighälften.

Gemäß einer weiteren besonderen Ausführungsform der Erfindung kann vorgesehen sein, dass der Kugelkäfig länglich ist und die Kugeln auf einer seiner Längsseiten im Abstand in seiner Längserstreckung angeordnet sind sowie auf besagter Längsseite nach außen vorragen.

Ebenso ist denkbar, dass der Kugelkäfig genau zwei Kugelkäfigtaschen aufweist und sich diese im Bereich seiner beiden Längsenden befinden.

Günstigerweise federn die beiden Federeinrichtungen oder mindestens zwei der Federeinrichtungen die jeweilige Kugel unter im wesentlichen + oder -45° zur Längserstreckung des Kugelkäfigs ab.

Vorteilhafterweise umfasst jede Federeinrichtung zwei Tellerfedern und insbesondere sind die beiden Tellerfedern mit entgegengesetzter Durchbiegung angeordnet, derart, dass sie eine konvexe Linse bilden.

Der Erfindung liegt die überraschende Erkenntnis zugrunde, dass durch die spezielle Gestaltung einer Rasteinheit und einer Druckknopfeinheit eine einfache werkzeuglose Verstellung von teleskopierbar ineinander geführten Teleskopelementen möglich ist. Durch die paarweise Anordnung der Kugelwälzlager ist eine genauere und gleichmäßigere Führung und dies zudem zu günstigeren Herstellkosten möglich.

Weitere Merkmale und Vorteile der Erfindung ergeben sich aus den beigefügten Ansprüchen und der nachfolgenden Beschreibung, in der ein Ausführungsbeispiel anhand von schematischen Zeichnungen im einzelnen erläutert ist. Dabei zeigt:
- Figur 1: eine perspektivische Ansicht von zwei teleskopierbar ineinander geführten Teleskopelementen gemäß einer besonderen Ausführungsform der vorliegenden Erfindung;
- Figur 2: die Teleskopelemente von Figur 1 in Explosionsansicht;
- Figur 3: einen Bereich von Figur 1 in Durchsicht;
- Figur 4: die wesentlichen Komponenten einer Rasteinrichtung, die in den vorangehend gezeigten Teleskopelementen zum Einsatz kommt;
- Figur 5: eine Explosionsansicht von Figur 4;
- Figuren 6a bis 6f: verschiedene Ansichten eines Teils der Komponenten in den Figuren 4 und 5 gezeigten Rasteinrichtung;
- Figur 7: eine perspektivische Ansicht von einem Rastschuhhalter gemäß einer besonderen Ausführungsform der vorliegenden Erfindung; und
- Figuren 8a bis 8c: verschiedene Ansichten von weiteren Komponenten der Rasteinrichtung.

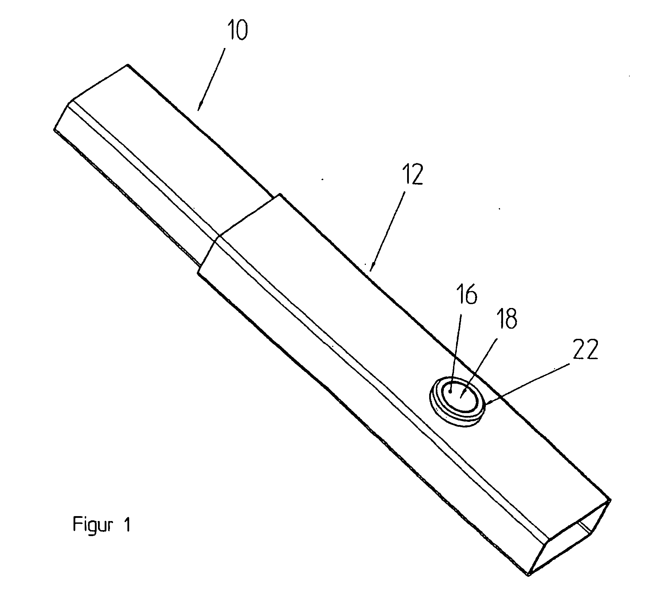

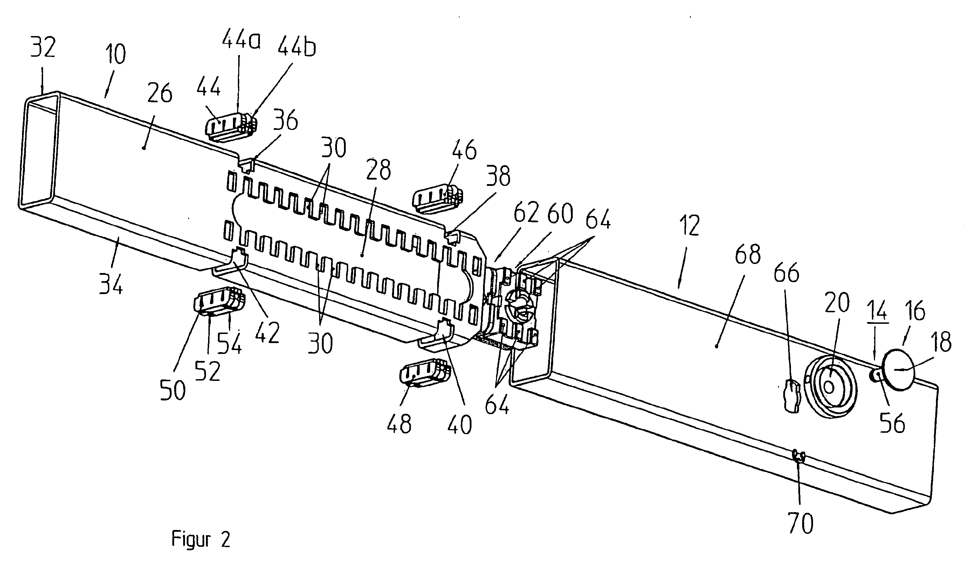

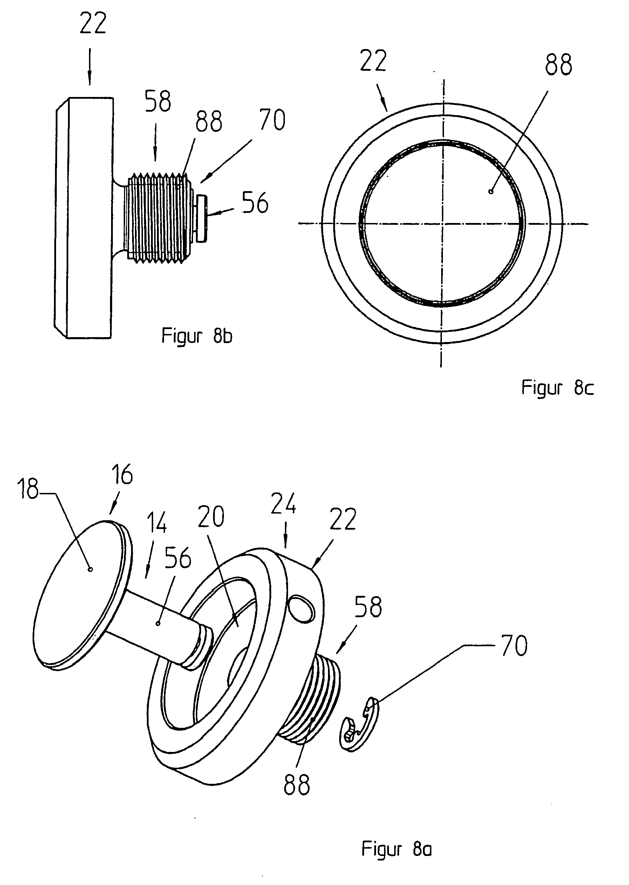

In Figur 1 sind zwei teleskopierbar ineinandergeführte Teleskopelemente, nämlich ein inneres Teleskopelement 10 und ein äußeres Teleskopelement 12, jeweils mit einem rechteckigen Querschnitt gezeigt, die über einen an dem äußeren Teleskopelement 12 zur Druckbetätigung freiliegenden Rastknopf 14 (siehe auch Figuren 2, 3, 4, 5 und Figuren 8a bis 8c), von dem in Figur 1 nur ein flacher Betätigungskopf 16 mit einer äußeren Betätigungsfläche 18 zu sehen ist, in der Teleskopierrichtung, d.h. in der Längsrichtung der beiden Teleskopelemente 10 und 12 verstellbar und in einer bestimmen Position durch Einrasten arretierbar sind. Der Betätigungskopf 16 befindet sich in einer mittigen Vertiefung 20 (siehe bspw. Figur 2) in einem flachen Kopf 22 eines schraubenartigen Elements 24 (siehe bspw. Figuren 8a bis 8c).

Figur 2 zeigt weitere Details der teleskopierbar ineinandergeführten Teleskopelemente 10 und 12 in Explosionsansicht. Das innere Teleskopelement 10 weist in seiner oberen Breitseite 26 eine Längsöffnung 28 mit quer zur Teleskopierrichtung gegenüberliegend und entgegengesetzt paarig ausgebildeten Rastaussparungen auf, von denen nur einige mit der Bezugszahl 30 gekennzeichnet sind. Weiterhin weist das innere Teleskopelement 10 in seinen beiden Schmalseiten 32 und 34 im Bereich beider Enden der Längsöffnung 28 quer zur Teleskopierrichtung gegenüberliegend ausgebildete Öffnungen 36, 38, 40 und 42 auf, in die von der Innenseite des inneren Teleskopelements 10 jeweils ein Kugelwälzlager 44, 46, 48 und 50 einklippsbar ist. Besagte Kugelwälzlager dienen zur Führung des inneren Teleskopelements 10 in dem äußeren Teleskopelement 12. Jedes Kugelwälzlager 44, 46, 48 und 50 umfasst einen Kugelkäfig, der aus zwei identischen Kugelkäfighälften aus Kunststoff zusammengesetzt ist, von denen nur die Kugelkäfighälften 44a und 44b des Kugelwälzlagers 44 gekennzeichnet sind. Weiterhin weist der Kugelkäfig mindestens zwei Kugelkäfigtaschen auf und in jeder Kugelkäfigtasche wird eine Kugel, von denen nur die Kugeln 52 und 54 des Kugelwälzlagers 50 gekennzeichnet sind, gehalten, wobei die Kugeln durch eine jeweilige in die jeweilige Kugelkäfigtasche eingelegte Federeinrichtung (nicht gezeigt) abgefedert sind.

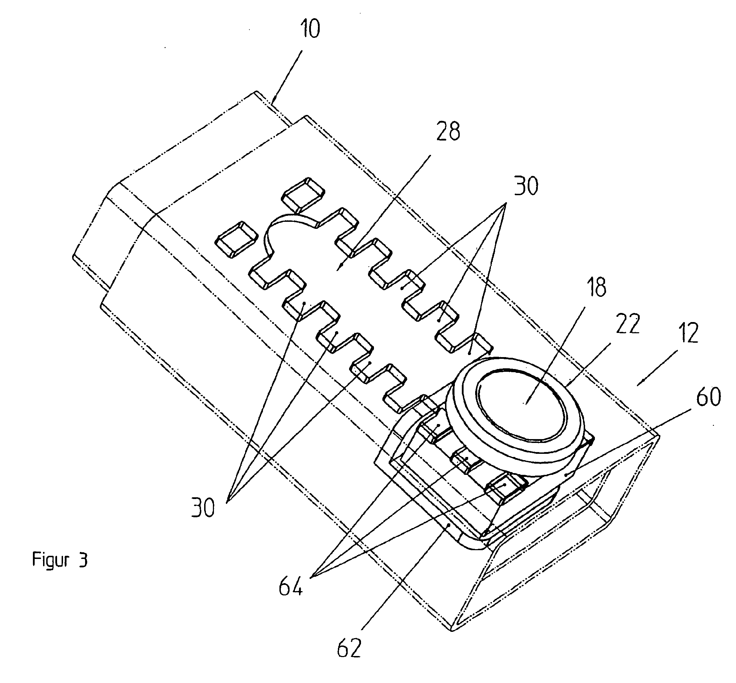

Weiterhin zeigt Figur 2, dass der Rastknopf 14 einen an der Unterseite des Betätigungskopfes 16 mittig angeordneten Schaft 56 aufweist. Der Schaft 56 erstreckt sich durch einen hohlen Schaft 58 (siehe Figuren 8a bis 8c) des schraubenartigen Elements 24. Des weiteren zeigt die Figur 2 einen Rastschuh 60 und einen Rastschuhhalter 62, die sich im Inneren des inneren Teleskopelements 10 befinden, wobei der Rastschuh 60 Rastvorsprünge 64 (siehe auch Figuren 3, 4, 5, 6a, 6b und 6d) aufweist, die zum Einrasten in eine oder mehrere der Rastaussparungen 30 vorgesehen sind.

Ferner zeigt die Figur 2 noch eine Öffnung 66 in der oberen Breitseite 68 des äußeren Teleskopelements 12, durch die sich der hohle Schaft 58 und durch die Längsöffnung 28 erstreckt. Eine Sicherungsscheibe 70 dient zum Sichern des Rastknopfes 14 in dem schraubenartigen Element 24 (siehe Figuren 8a, 8c).

In Figur 3 ist der Rastschuh 60 in einer Position gezeigt, in der seine beiden Reihen von jeweils drei Rastvorsprüngen 64 in eine entsprechende Anzahl von gegenüberliegenden Rastaussparungen 30 vom Inneren des inneren Teleskopelements 10 eingerastet sind.

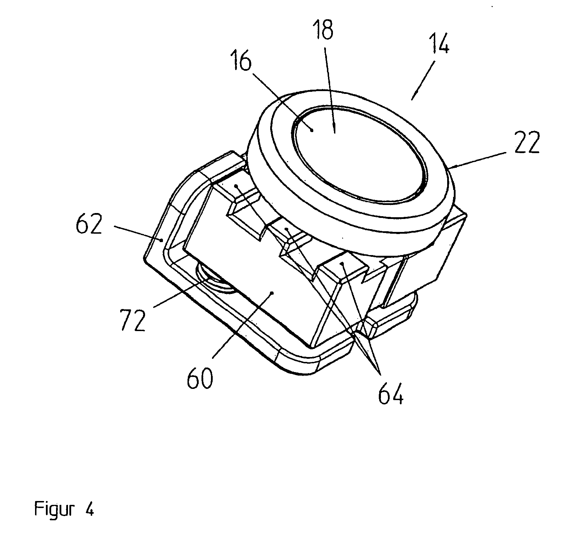

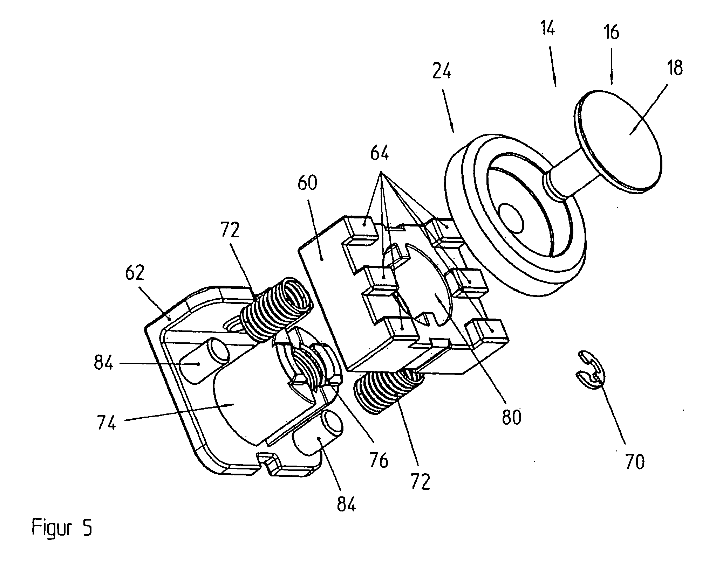

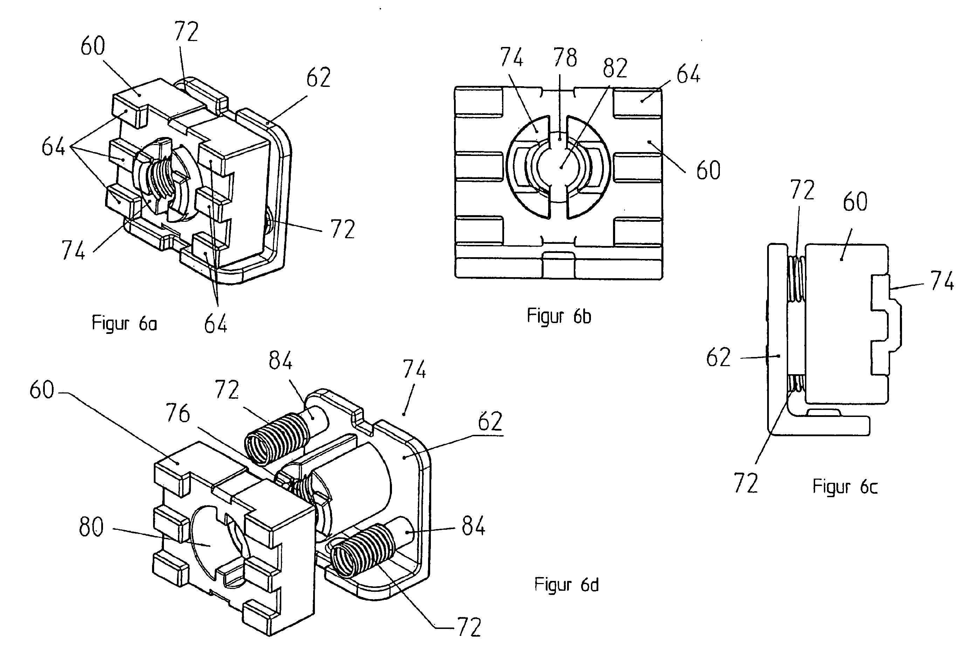

Figur 4 zeigt den Rastknopf 14, den Rastschuh 60 und den Rastschuhhalter 62 im zusammengebauten Zustand, wobei jedoch das innere Teleskopelement 10 und das äußere Teleskopelement 12 nicht gezeigt sind. Der Rastschuh 60 befindet sich zwischen dem Knopf 14 und dem Rastschuhhalter 62, wobei der Rastknopf 14 und der Rastschuhhalter 62 durch den Rastschuh 60 hindurch miteinander verbunden sind und der Rastschuh 60 durch Federn, nämlich Schraubenfedern 72 (siehe auch Figuren 5, 6c und 6d) von dem Rastschuhhalter 62 weg in Richtung zum Betätigungskopf 16 vorgespannt wird.

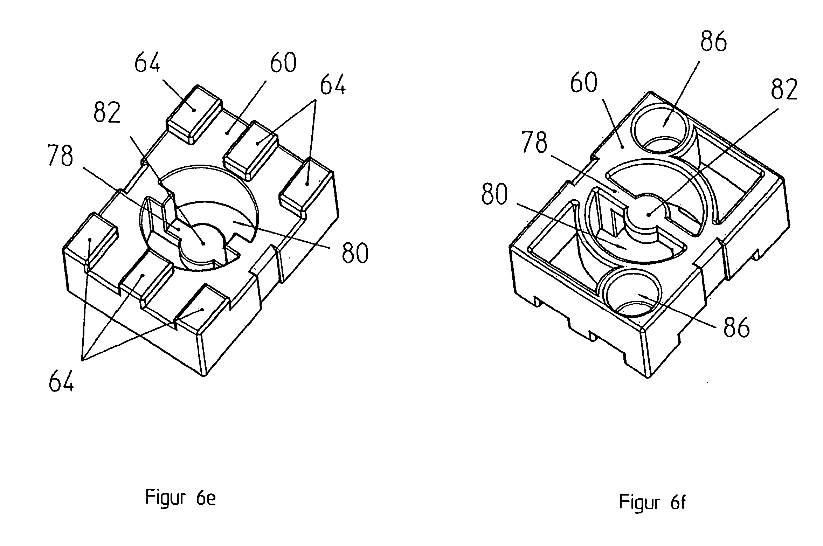

Wie sich anhand der Figuren 5, 6a bis 6d und 7 ergibt, weist der Rastschuhhalter 62 einen Winkel auf, auf dessen einen Winkelschenkelfläche sich ein im wesentlichen zylinderförmiger Ansatz 74 senkrecht erhebt. Der zylinderförmige Ansatz 74 ist in Längsrichtung zweigeteilt und weist ein Innengewinde 76 auf. Der Rastschuh 60 ist mittels einer durch einen mittigen Steg 78 unterteilten Durchgangsbohrung 80 auf dem Ansatz 74 mittels des Rastknopfes 14 quer zur Teleskopierrichtung gegen die Federkraft der beiden Schraubenfedern 72 verschiebbar. Dazu drückt der Schaft 56 des Rastknopfes 14 auf den mittleren Bereich 82 des Stegs 78 (siehe auch Figuren 6e und 6f). Die Schraubenfedern 72 sitzen auf jeweiligen Stiften 84, die sich von besagter Winkelschenkelfläche senkrecht erstrecken, und ragen in geeignet dimensionierte Sackbohrungen 86, 86 (s. Figur 6f) in den Rastschuh 60 (Figur 6f) hinein. Der hohle Schaft 58 weist ein Außengewinde 88 (s. Figur 8b) auf und steht mit diesem mit dem Innengewinde 76 in Schraubeingriff. Da der Rastknopf 14 mit seinem Schaft 56 in dem hohlen Schaft 58 über einen geeigneten Bereich verschiebbar ist, läßt sich der Rastschuh 60 über seinen Steg 78 von dem äußeren Ende des Schaftes 56 des Rastknopfes 14 gegen die Federkraft der Schraubenfedern 72, quer zur Teleskopierrichtung in Richtung zum Rastschuhhalter 62 verschieben. Dadurch lässt sich der Rastschuh 60 außer Eingriff mit den Rastaussparungen 30 bringen und in Teleskopierrichtung in der Längsöffnung 28 durch Bewegen des inneren Teleskopelements 10 gegenüber dem äußeren Teleskopelement 12 verstellen, wobei der Rastschuh 60 nachfolgend durch die Federkraft der Schraubenfedern 72 in anderen Rastaussparungen 30 wieder einrastbar ist.

Figur 6a zeigt eine perspektivische Ansicht von Rastschuhhalter 62 und Rastschuh 60 im montierten Zustand. Fig. 6b zeigt eine Draufsicht auf selbige, während Figur 6c eine Seitenansicht davon zeigt. In Fig. 6d ist eine Explosionsansicht davon gezeigt.

Schließlich zeigen die Figuren 6e und 6f eine Ansicht auf den Rastschuh 60 von der Seite der Rastvorsprünge 64 (Figur 6e) und von der gegenüberliegenden Seite (Figur 6f).

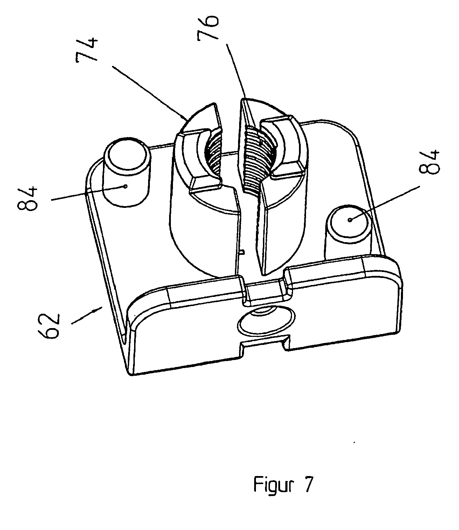

Figur 7 zeigt noch einmal den bereits im Zusammenhang mit der Figur 5 beschriebenen Rastschuhhalter 62 in perspektivischer Ansicht.

Schließlich ist in Figur 8a der Rastknopf 14 mit Schaft 56 und dem schraubenartigen Element 24 mit hohlem Schaft 58 und Außengewinde 88 sowie Sicherungsscheibe 70 in Explosionsdarstellung gezeigt. Die weiteren Figuren 8b und 8c zeigen die Komponenten im zusammengesetzten Zustand in Seitenansicht (Figur 8b) und in Draufsicht (Figur 8c).

Der Rastknopf, das schraubenartige Element 24 und der Rastschuhhalter 62 sind aus Metall hergestellt, während der Rastschuh 60 aus Kunststoff hergestellt ist.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Teleskopierbar ineinander geführte Teleskopelemente (10, 12), insbesondere Profile eines, insbesondere höhenverstellbaren, Tischgestells, mit zumindest im wesentlichen identischer Querschnittsgestalt, wobei ausgewählte Stellungen mittels einer Rasteinrichtung rastsicherbar sind, die einen Rastknopf (14), welcher an einem äußeren (12) der beiden Teleskopelemente (10, 12) zur Druckbetätigung freiliegt, und einen mit dem Rastknopf in Wirkverbindung stehenden Rastschuh (60) aufweist, der im Inneren des inneren (10) der beiden Teleskopelemente (10, 12) angeordnet und in Rastaussparungen (30) in einer Längsöffnung (28) im inneren Teleskopelement (10) federnd einrastbar und durch den Rastknopf (14) gegen die Federkraft weiter in das Innere des inneren Teleskopelements (10) zurückschiebbar, in Teleskopierrichtung durch Bewegen des inneren Teleskopelements (10) gegenüber dem äußeren Teleskopelement (12) verstellbar und unter der Federkraft in eine andere Rastaussparung (30) oder andere Rastaussparungen (30) wieder einrastbar ist, **dadurch gekennzeichnet, dass** die teleskopierbar ineinander geführten Teleskopelemente ferner mindestens zwei in Längsrichtung im Abstand zueinander angeordnete Paare von einander in Längsrichtung quer gegenüberliegend angeordneten Öffnungen (36, 42, 38, 40) in dem inneren Teleskopelement umfassen, wobei jeder Öffnung ein Kugelwälzlager (44 bzw. 46 bzw. 48 bzw. 50) zugeordnet ist, das am inneren Umfang des inneren Teleskopelements so angeordnet ist, dass dessen Kugeln über die jeweilige Öffnung innen an dem äußeren Teleskopelement angreifen.

2. Teleskopierbar ineinander geführte Teleskopelemente (10, 12) nach Anspruch 1, **dadurch gekennzeichnet, dass** ein Rastschuhhalter (62) auf der Höhe des Rastknopfes (14) im Inneren des inneren Teleskopelements (10), der zum Halten und Führen des Rastschuhs (60) gestaltet und an dem äußeren Teleskopelement (12) in einem Abstand lösbar befestigt ist, und mindestens zwei Federn zwischen dem Rastschuhhalter (62) und dem Rastschuh (60) zum Ausüben der Federkraft auf den Rastschuh (60) von dem Rastschuhhalter (62) weg quer zur Teleskopierrichtung in Richtung nach außen vorgesehen sind.

3. Teleskopierbar ineinander geführte Teleskopelemente (10, 12) nach Anspruch 2 **dadurch gekennzeichnet, dass** der Rastschuh (60) mittels einer durch einen mittigen Steg (78) unterteilten Durchgangsbohrung (80) in selbigem und einem komplementär gestalteten Ansatz (74) an dem Rastschuhhalter (62) quer zur Teleskopierrichtung bei Druckbetätigung des Rastknopfes (14) geführt wird.

4. Teleskopierbar ineinander geführte Teleskopelemente (10, 12) nach Anspruch 3, **dadurch gekennzeichnet, dass** der Rastknopf (14) einen flachen Betätigungskopf (16) mit einer äußeren Betätigungsfläche (18) und einen an der Unterseite des Betätigungskopfes (16) mittig angeordneten Schaft (56) aufweist, der sich in den Ansatz (74) des Rastschuhhalters (62) hinein erstreckt und dessen Ende an dem Steg (78) des Rastschuhs (60) anliegt.

5. Teleskopierbar ineinander geführte Teleskopelemente (10; 12) nach Anspruch 4, **dadurch gekennzeichnet, dass** ein schraubenartiges Element (24) mit einem flachen Kopf (22) mit einer mittigen Vertiefung (20) und einem hohlen Schaft (58) mit einem Außengewinde (88) sowie eine gegenüber dem flachen Kopf (22) des schraubenförmigen Elements (24) kleinere Öffnung (66) in dem äußeren Teleskopelement (12) vorgesehen sind, durch die sich der hohle Schaft (58) des schraubenartigen Elements (24) von außen in den Ansatz (74) des Rastschuhhalters (62) hinein erstreckt und mit dem Ansatz (74) über ein Innengewinde (76) in letzterem in Schraubverbindung steht, wobei in der mittigen Vertiefung (20) in dem flachen Kopf (22) des schraubenartigen Elements (24) der flache Betätigungskopf (16) des Rastknopfes (14) gegen die Federkraft verschiebbar angeordnet ist und sich der Schaft (58) des Rastknopfes (14) durch den hohlen Schaft (58) des schraubenartigen Elements (24) erstreckt.

6. Teleskopierbar ineinander geführte Teleskopelemente (10, 12) nach einem der vorangehenden Ansprüche, **dadurch gekennzeichnet, dass** der Rastschuh (60) aus Kunststoff ist.

7. Teleskopierbar ineinander geführte Teleskopelemente (10; 12) nach einem der vorangehenden Ansprüche, **dadurch gekennzeichnet, dass** der Rastschuhhalter (62) und/oder der Rastknopf aus Metall ist.

8. Teleskopierbar ineinander geführte Teleskopelemente (10; 12) nach einem der Ansprüche 5 bis 7, **dadurch gekennzeichnet, dass** das schraubenartige Element (24) aus Metall ist.

9. Teleskopierbar ineinander geführte Teleskopelemente (10; 12) nach einem der vorangehenden Ansprüche, **dadurch gekennzeichnet, dass** die mindestens zwei Federn Schraubenfedern (72, 72) sind.

10. Teleskopierbar ineinander geführte Teleskopelemente (10, 12) nach einem der vorangehenden Ansprüche, **dadurch gekennzeichnet, dass** das äußere Teleskopelement (12) und das innere Teleskopelement (10) jeweils einen rechteckigen oder quadratischen runden Querschnitt oder jeweils ein Freiformprofil aufweisen.

11. Teleskopierbar ineinander geführte Teleskopelemente (10, 12) nach einem der vorangehenden Ansprüche, **dadurch gekennzeichnet, dass** die Kugelwälzlager (44, 46, 48, 50) in die jeweilige Öffnung (36, 38, 40, 42) einklipsbar sind.

12. Teleskopierbar ineinander geführte Teleskopelemente (10, 12) nach einem der vorangehenden Ansprüche, **dadurch gekennzeichnet, dass** genau zwei Paare von Öffnungen (36, 38, 40, 42) vorgesehen sind.

13. Teleskopierbar ineinander geführte Teleskopelemente (10, 12) nach einem der vorangehenden Ansprüche, **dadurch gekennzeichnet, dass** das innere Teleskopelement (10) und das äußere Teleskopelement (12) jeweils einen rechteckigen Querschnitt aufweisen und die Öffnungen (36, 38, 40, 42) zumindest in den Schmalseiten des inneren Teleskopelements (10) ausgebildet sind.

14. Teleskopierbar ineinander geführte Teleskopelemente (10, 12) nach einem der vorangehenden Ansprüche, **dadurch gekennzeichnet, dass** das Kugelkäfiglager (44, 46, 48, 50) umfasst: einen Kugelkäfig, der aus zwei identischen Kugelkäfighälften (44a, 44b) aus Kunststoff zusammengesetzt ist und mindestens zwei Kugelkäfigtaschen aufweist, und in jeder Kugelkäfigtaschen eine darin gehaltene Kugel (52, 54), die durch eine jeweilige in die jeweilige Kugelkäfigtasche eingelegte Federeinrichtung abgefedert ist.

15. Teleskopierbar ineinander geführte Teleskopelemente (10, 12) nach einem der vorangehenden Ansprüche, **dadurch gekennzeichnet, dass** das Kugelwälzlager (44, 46, 48, 50) ein Linearlager ist.

16. Teleskopierbar ineinander geführte Teleskopelemente (10, 12) nach Anspruch 14 oder 15, **dadurch gekennzeichnet, dass** die Kugelkäfigtaschen erst durch Zusammensetzen der Kugelkäfighälften (44a, 44b) resultieren.

17. Teleskopierbar ineinander geführte Teleskopelemente (10, 12) nach Anspruch 15 oder 16, **dadurch gekennzeichnet, dass** der Kugelkäfig länglich ist und die Kugeln (52, 54) auf einer seiner Längsseiten im Abstand in seiner Längserstreckung angeordnet sind sowie auf besagter Längsseite nach außen vorragen.

18. Teleskopierbar ineinander geführte Teleskopelemente (10, 12) nach Anspruch 17, **dadurch gekennzeichnet, dass** der Kugelkäfig genau zwei Kugelkäfigtaschen aufweist und sich diese im Bereich seiner beiden Längsenden befinden.

19. Teleskopierbar ineinander geführte Teleskopelemente (10, 12) nach einem der vorangehenden Ansprüche, **dadurch gekennzeichnet, dass** die beiden Federeinrichtungen oder mindestens zwei der Federeinrichtungen die jeweilige Kugel (52, 54) unter im wesentlichen + oder -45° zur Längserstreckung des Kugelkäfigs abfedern.

20. Teleskopierbar ineinander geführte Teleskopelemente (10, 12) nach einem der vorangehenden Ansprüche, **dadurch gekennzeichnet, dass** jede Federeinrichtung zwei Tellerfedern umfasst, insbesondere dass die beiden Tellerfedern mit entgegengesetzter Durchbiegung angeordnet sind, derart, dass sie eine konvexe Linse bilden.

## Claims

1. Extendible nested telescopic elements (10, 12), in particular profiles of a table frame, in particular height adjustable, with at least substantially identical cross section design, wherein selected positions can be securely engaged by means of a locking device which comprises a locking button (14) that is exposed at an outer (12) of the two telescopic elements (10, 12) for pressure activation, and a locking shoe (60) that is actively connected with the locking button and arranged on the inside of the inner (10) of the two telescopic elements (10, 12) and can be engaged by spring force in locking recesses (30) in a longitudinal opening (28) in the inner telescopic element (10) and can be pushed back further inside the inner telescopic element (10) by the locking button (14) against spring force, can be adjusted in the telescoping direction by moving the inner telescopic element (10) in relation to the outer telescopic element (12) and re-engaged under spring force in another locking recess (30) or locking recesses (30), **characterised in that** the extendible nested telescopic elements furthermore comprise at least two pairs of openings (36, 42, 38, 40) arranged spaced longitudinally from each other and transversely opposite each other in the longitudinal direction in the inner telescopic element, in the inner telescopic element, wherein allocated to each opening is a ball roller bearing (44 or 46 or 48 or 50), which is arranged on the inner periphery of the inner telescopic element so that its balls grip on the inside of the outer telescopic element via the respective opening.

2. Extendible nested telescopic elements (10, 12) according to claim 1, **characterised in that** a locking shoe holder (62) is formed at the height of the locking button (14) in the inside of the inner telescopic element (10) and is designed to hold and guide the locking shoe (60) and is releasably attached to the outer telescopic element (12) at a distance, and comprises at least two springs between the locking shoe holder (62) and the locking shoe (60) to exert spring force on the locking shoe (60) away from the locking shoe holder (62) transverse to the telescoping direction towards the outside.

3. Extendible nested telescopic elements (10, 12) according to claim 2, **characterised in that** the locking shoe (60) is guided by means of a bore (80) divided by a central bar (78) therein and a complementing attachment (74) on the locking shoe holder (62) transverse to the telescoping direction for pressure activation of the locking button (14).

4. Extendible nested telescopic elements (10, 12) according to claim 3, **characterised in that** the locking button (14) has a flat activation head (16) with an outer activation surface (18) and a shaft (56) which is arranged centrally on the underside of the locking head (16) and extends into the attachment (74) of the locking shoe holder (62) and lies with its end on the bar (78) of the locking shoe (60).

5. Extendible nested telescopic elements (10, 12) according to claim 4, **characterised in that** a screw-like element (24) with a flat head (22) is provided with a central recess (20) and a hollow shaft (58) with an outer thread (88) and a smaller opening (66) opposite the flat head (22) of the screw-like element (24) in the outer telescopic element (12), through which opening the hollow shaft (58) of the screw-like element (24) extends from the outside into the attachment (74) of the locking shoe holder (62) and is in screw connection with the attachment (74) via an inner thread (76) therein, where in the central recess (20) in the flat head (22) of the screw-like element (24) is arranged the flat activation head (16) of the locking button (14) to be moveable against spring force, and the shaft (58) of the locking button (14) extends through the hollow shaft (58) of the screw-like element (24).

6. Extendible nested telescopic elements (10, 12) according to any of the preceding claims, **characterised in that** the locking shoe (60) is made of plastic.

7. Extendible nested telescopic elements (10, 12) according to any of the preceding claims, **characterised in that** the locking shoe holder (62) and / or the locking button is made of metal.

8. Extendible nested telescopic elements (10, 12) according to any of claims 5 to 7, **characterised in that** the screw-like element (24) is made of metal.

9. Extendible nested telescopic elements (10, 12) according to any of the preceding claims, **characterised in that** the at least two springs are coil springs (72, 72).

10. Extendible nested telescopic elements (10, 12) according to any of the preceding claims, **characterised in that** the outer telescopic element (12) and the inner telescopic element (10) each have a rectangular or square or round cross section or free-form profile.

11. Extendible nested telescopic elements (10, 12) according to any of the preceding claims, **characterised in that** the ball roller bearings (44, 46, 48, 50) can be clipped in the respective openings (36, 38, 40, 42).

12. Extendible nested telescopic elements (10, 12) according to any of the preceding claims, **characterised in that** precisely two pairs of openings (36, 38, 40, 42) are provided.

13. Extendible nested telescopic elements (10, 12) according to any of the preceding claims, **characterised in that** the inner telescopic element (10) and the outer telescopic element (12) each have a rectangular cross section and the openings (36, 38, 40, 42) are formed at least in the narrow sides of the inner telescopic element (10).

14. Extendible nested telescopic elements (10, 12) according to any of the preceding claims, **characterised in that** the ball cage bearing (44, 46, 48, 50) comprises a ball cage composed of two identical ball cage halves (44a, 44b) of plastic and at least two ball cage pockets, and in each ball cage pocket a ball (52, 54) held therein which is sprung-mounted by the respective spring device inserted in the respective ball cage pocket.

15. Extendible nested telescopic elements (10, 12) according to any of the preceding claims, **characterised in that** the ball roller bearing (44, 46, 48, 50) is a linear bearing.

16. Extendible nested telescopic elements (10, 12) according to claim 14 or 15, **characterised in that** the ball cage pockets only result by assembly of the ball cage halves (44a, 44b).

17. Extendible nested telescopic elements (10, 12) according to claim 15 or 16, **characterised in that** the ball cage is oblong and the balls (52, 54) are arranged on one of its long sides spaced in the longitudinal direction and protruding outward on said long side.

18. Extendible nested telescopic elements (10, 12) according to claim 17, **characterised in that** the ball cage has precisely two ball cage pockets and these are located in the vicinity of its two long ends.

19. Extendible nested telescopic elements (10, 12) according to any of the preceding claims, **characterised in that** the two spring devices or at least two of the spring devices spring-mount the respective balls (52, 54) under substantially + or - 45° to the longitudinal extent of the ball cage.

20. Extendible nested telescopic elements (10, 12) according to any of the preceding claims, **characterised in that** each spring device comprises at least two cup springs, in particular the two cup springs are arranged with opposing curvature such that they form a convex lens.

## Revendications

1. Eléments de télescope guidés l'un dans l'autre de manière télescopique (10, 12), en particulier profilés d'un piètement pour table, en particulier réglable en hauteur, avec au moins une forme de section transversale sensiblement identique, sachant que des positions sélectionnées peuvent être bloquées par encliquetage à l'aide d'un dispositif d'encliquetage présentant un bouton d'encliquetage (14) qui est dégagé sur un élément extérieur (12) des deux éléments de télescope (10, 12) pour l'actionnement par pression, et un coussinet d'encliquetage (60) se trouvant en liaison active avec le bouton d'encliquetage, lequel coussinet est disposé à l'intérieur de l'élément intérieur (10) des deux éléments de télescope (10, 12) et peut être encliqueté de manière élastique dans des évidements d'encliquetage (30) dans une ouverture longitudinale (28) dans l'élément de télescope intérieur (10) et peut être repoussé par le bouton d'encliquetage (14) contre la force de ressort davantage à l'intérieur de l'élément de télescope intérieur (10), peut être réglé dans le sens de télescopage par déplacement de l'élément de télescope intérieur (10) par rapport à l'élément de télescope extérieur (12) et peut être de nouveau encliqueté par la force de ressort dans un autre évidement d'encliquetage (30) ou d'autres évidements d'encliquetage (30), **caractérisés en ce que** les éléments de télescopes guidés l'un dans l'autre de manière télescopique comportent de plus au moins deux paires disposées à distance l'une de l'autre dans le sens longitudinal d'ouvertures (36, 42, 38, 40) disposées de manière opposée transversalement dans le sens longitudinal dans l'élément de télescope intérieur, sachant qu' à chaque ouverture est associé un roulement à billes (44 ou 46 ou 48 ou 50) qui est disposé sur la périphérie intérieure de l'élément de télescope intérieur de sorte que ses billes agissent par l'ouverture respective à l'intérieur sur l'élément de télescope extérieur.

2. Eléments de télescope guidés l'un dans l'autre de manière télescopique (10, 12) selon la revendication 1, **caractérisés en ce qu'**un support de coussinet d'encliquetage (62) est prévu au niveau du bouton d'encliquetage (14) à l'intérieur de l'élément de télescope intérieur (10), lequel support est conçu pour le maintien et le guidage du coussinet d'encliquetage (60) et est fixé à distance de manière amovible sur l'élément de télescope extérieur (12), et au moins deux ressorts sont prévus entre le support de coussinet d'encliquetage (62) et le coussinet d'encliquetage (60) pour l'exercice de la force de ressort sur le coussinet d'encliquetage (60) loin du support de coussinet d'encliquetage (62) transversalement au sens de télescopage vers l'extérieur.

3. Eléments de télescope guidés l'un dans l'autre de manière télescopique (10, 12) selon la revendication 2, **caractérisés en ce que** le coussinet d'encliquetage (60) est guidé à l'aide d'un perçage débouchant (80) divisé par une traverse médiane (78) dans une même saillie conçue de manière complémentaire (74) sur le support de coussinet d'encliquetage (62) transversalement au sens de télescopage lors de l'actionnement par pression du bouton d'encliquetage (14).

4. Eléments de télescope guidés l'un dans l'autre de manière télescopique (10, 12) selon la revendication 3, **caractérisés en ce que** le bouton d'encliquetage (14) présente un bouton d'actionnement (16) plat avec une surface d'actionnement extérieure (18) et une tige (56) disposée au milieu sur le côté inférieur du bouton d'actionnement (16), laquelle tige s'étend dans la saillie (74) du support de coussinet d'encliquetage (62) et son extrémité repose sur la traverse (78) du coussinet d'encliquetage (60).

5. Eléments de télescope guidés l'un dans l'autre de manière télescopique (10, 12) selon la revendication 4, **caractérisés en ce qu'**il est prévu un élément (24) de type vis présentant une tête plate (22) avec une cavité médiane (20) et une tige creuse (58) avec un filetage extérieur (88) ainsi qu'une ouverture (66) plus petite par rapport à la tête plate (22) de l'élément de type vis (24) dans l'élément de télescope extérieur (12), par laquelle ouverture la tige creuse (58) de l'élément de type vis (24) s'étend de l'extérieur dans la saillie (74) du support de coussinet d'encliquetage (62) et se trouve en liaison de vissage avec la saillie (74) par un filetage intérieur (76) dans cette dernière, sachant que la tête d'actionnement (16) plate du bouton d'encliquetage (14) est disposée de manière mobile contre la force de ressort dans la cavité médiane (20) dans la tête plate (22) de l'élément de type vis (24) et la tige (58) du bouton d'encliquetage (14) s'étend par la tige creuse (58) de l'élément de type vis (24).

6. Eléments de télescope guidés l'un dans l'autre de manière télescopique (10, 12) selon l'une quelconque des revendications précédentes, **caractérisés en ce que** le coussinet d'encliquetage (60) est en plastique.

7. Eléments de télescope guidés l'un dans l'autre de manière télescopique (10, 12) selon l'une quelconque des revendications précédentes, **caractérisés en ce que** le support de coussinet d'encliquetage (62) et/ou le bouton d'encliquetage est en métal.

8. Eléments de télescope guidés l'un dans l'autre de manière télescopique (10, 12) selon l'une quelconque des revendications 5 à 7, **caractérisés en ce que** l'élément de type vis (24) est en métal.

9. Eléments de télescope guidés l'un dans l'autre de manière télescopique (10, 12) selon l'une quelconque des revendications précédentes, **caractérisés en ce qu'**au moins deux ressorts sont des ressorts cylindriques (72, 72).

10. Eléments de télescope guidés l'un dans l'autre de manière télescopique (10, 12) selon l'une quelconque des revendications précédentes, **caractérisés en ce que** l'élément de télescope extérieur (12) et l'élément de télescope intérieur (10) présentent chacun une section transversale rectangulaire, carrée ou ronde ou chacun un profilé de forme libre.

11. Eléments de télescope guidés l'un dans l'autre de manière télescopique (10, 12) selon l'une quelconque des revendications précédentes, **caractérisés en ce que** les roulements à billes (44, 46, 48, 50) peuvent être clipsés dans l'ouverture respective (36, 38, 40, 42).

12. Eléments de télescope guidés l'un dans l'autre de manière télescopique (10, 12) selon l'une quelconque des revendications précédentes, **caractérisés en ce que** précisément deux paires d'ouvertures (36, 38, 40, 42) sont prévues.

13. Eléments de télescope guidés l'un dans l'autre de manière télescopique (10, 12) selon l'une quelconque des revendications précédentes, **caractérisés en ce que** l'élément de télescope intérieur (10) et l'élément de télescope extérieur (12) présentent chacun une section transversale rectangulaire et les ouvertures (36, 38, 40, 42) sont réalisées au moins dans les petits côtés de l'élément de télescope intérieur (10).

14. Eléments de télescope guidés l'un dans l'autre de manière télescopique (10, 12) selon l'une quelconque des revendications précédentes, **caractérisés en ce que** le roulement à billes (44, 46, 48, 50) comporte : une cage à billes qui est composée de deux moitiés de cage à billes identiques (44a, 44b) en plastique et présente au moins deux poches de cage à billes, et dans chaque poche de cage à billes, une bille (52, 54) maintenue dedans qui est suspendue sur ressort par un dispositif de ressort respectif inséré dans la poche de cage à billes respective.

15. Eléments de télescope guidés l'un dans l'autre de manière télescopique (10, 12) selon l'une quelconque des revendications précédentes, **caractérisés en ce que** le roulement à billes (44, 46, 48, 50) est un roulement linéaire.

16. Eléments de télescope guidés l'un dans l'autre de manière télescopique (10, 12) selon la revendication 14 ou 15, **caractérisés en ce que** les poches de cage à billes ne résultent que par l'assemblage des moitiés de cage à billes (44a, 44b).

17. Eléments de télescope guidés l'un dans l'autre de manière télescopique (10, 12) selon la revendication 15 ou 16, **caractérisés en ce que** la cage à billes est oblongue et les billes (52, 54) sont disposées sur un de ses côtés longitudinaux à distance dans son étendue longitudinale ainsi que dépassent vers l'extérieur sur ledit côté longitudinal.

18. Eléments de télescope guidés l'un dans l'autre de manière télescopique (10, 12) selon la revendication 17, **caractérisés en ce que** la cage à billes présente précisément deux poches de cage à billes et celles-ci se trouvent dans la zone de ses deux extrémités longitudinales.

19. Eléments de télescope guidés l'un dans l'autre de manière télescopique (10, 12) selon l'une quelconque des revendications précédentes, **caractérisés en ce que** les deux dispositifs de ressort ou au moins deux des dispositifs de ressort suspendent sur ressort la bille respective (52, 54) selon sensiblement + ou - 45° par rapport à l'étendue longitudinale de la cage à billes.

20. Eléments de télescope guidés l'un dans l'autre de manière télescopique (10, 12) selon l'une quelconque des revendications précédentes, **caractérisés en ce que** chaque dispositif de ressort comporte deux rondelles-ressorts, en particulier **en ce que** les deux rondelles-ressorts dotées d'une courbure opposée sont disposées de manière à former une lentille convexe.
